# EUROPÄISCHE PATENTSCHRIFT

(11) **EP 2 655 174 B1**
(45) Veröffentlichungstag und Bekanntmachung des Hinweises auf die Patenterteilung: **26.12.2018**
(21) Anmeldenummer: 11776370.6
(22) Anmeldetag: 27.10.2011
(51) Int. Cl.: B62D 65/00, B62D 63/02, B62D 65/04, B62D 65/10, B62D 65/12, B62D 25/20

(54) **VERFAHREN ZUM MONTIEREN VON KRAFTWAGEN**
ASSEMBLY PROCESS OF A MOTOR VEHICLE
MÉTHODE D'ASSEMBLAGE D'UN VÉHICULE À MOTEUR

(30) Priorität: 23.12.2010 DE 102010055941
(43) Veröffentlichungstag der Anmeldung: 30.10.2013
(73) Patentinhaber: Daimler AG, 70327 Stuttgart (DE)
(72) Erfinder: GREVENER, Christoph, 75391 Gechingen (DE); HABISREITINGER, Uwe, 72250 Freudenstadt/Dietersweiler (DE); KREVET, Andreas, 71139 Ehningen (DE); MÜLLER, Matthias, 72213 Altensteig (DE); STARK, Thomas, 72074 Tübingen (DE); WIRTH, Konrad, 75233 Tiefenbronn (DE); ZÜRN, Michael, 71065 Sindelfingen (DE)
(74) Vertreter: JENSEN & SON
(86) Internationale Anmeldenummer: PCT/EP2011/005429
(87) Internationale Veröffentlichungsnummer: WO 2012/084085

(56) Entgegenhaltungen:
- EP-A1- 0 171 576
- DE-A1- 3 603 709
- DE-A1- 3 702 619
- DE-A1- 3 707 684
- DE-A1- 10 154 353
- DE-A1-102007 047 037

## Beschreibung

Die Erfindung betrifft ein Verfahren zum Montieren von Kraftwagen gemäß dem Oberbegriff des Patentanspruchs 1.

Ein solches Verfahren zum Montieren von Kraftwagen ist beispielsweise bereits aus der EP 0 171 576 A1 als bekannt zu entnehmen. Dort ist ein Bodenmodul in Form eines tragenden Chassis vorgesehen, auf welches ein nicht tragender Aufbau aufgesetzt wird. Das tragende, einen Rahmen aufweisende Bodenmodul wird dabei neben einem Antriebsstrang und einem Fahrwerk beispielsweise auch mit mehreren Sitzanlagen bestückt, bevor der Aufbau auf das Bodenmodul aufgesetzt wird.

Aus dem Serienfahrzeugbau von Personenkraftwagen, welche im Unterschied zum Kraftwagen gemäß der EP 0 171 576 A1 üblicherweise einen Rohbau beziehungsweise eine Karosserie in selbsttragender Bauweise aufweisen, ist es allgemein bekannt, den Antriebsstrang und das Fahrwerk vorzufertigen und auf einem fahrerlosen Transportsystem zu montieren. Parallel hierzu wird üblicherweise der Rohbau des Kraftwagens mit einem Inneneinbau in einer Hauptmontagelinie versehen, in deren Anschluss der Rohbau im Rahmen der so genannten Hochzeit mit dem Antriebsstrang und dem Fahrwerk verbunden wird.

Weiterhin zeigt die DE 37 07 684 A1 eine Modulkonstruktion für ein Fahrzeug mit mehreren Einzelmodulen, wobei als ein Modul eine Bodenplattform verwendet ist. Dabei weist das Fahrzeug erst nach dem Zusammenbau die für eine Fahrzeugkarosserie gewünschten Eigenschaften wie Crashfestigkeit und Tragfähigkeit auf, da jedes einzelne Modul einen Beitrag zur Tragfähigkeit des Gesamtfahrzeugs liefert.

Die DE 10 2007 047 037 A1 zeigt weiterhin eine Kraftfahrzeugkarosserie, bei der der Hinterwagen der Karosserie so ausgelegt ist, dass ein oder mehrere Querträger mit modulartig daran angeordneten Aggregaten je nach aktuell gewünschter Ausstattung in die Karosserie eingebaut werden können.

Darüber hinaus zeigt die DE 101 54 353 A1 einen modularen Fahrzeugaufbau, bei dem das Fahrzeugchassis einen Rahmen aufweist, mit dem eine Schale zur Aufnahme einer Energiequelle zum Antreiben eines Antriebssystems verbunden ist.

Allgemein tritt dabei im Serienfahrzeugbau von Personenkraftwagen die Problematik auf, dass gegenwärtig eine Vielzahl von Fahrzeugvarianten insbesondere dadurch entsteht, dass unterschiedliche Antriebskonzepte angeboten werden. Unter Antriebskonzept sind dabei insbesondere verschiedene Antriebssysteme für das Kraftfahrzeug, die unterschiedliche Energiequellen verwenden, also beispielsweise Verbrennungsmotoren, Gasmotoren, Elektromotoren, Brennstoffzellenantriebe oder Hybridantriebe zu verstehen.

Bei der heutigen Abfolge der Montage der Kraftwagen bedingt dies, dass viele Montageschritte, welche infolge der unterschiedlichen Varianten entsprechend unterschiedlich sind, innerhalb der Hauptmontagelinie durchgeführt werden müssen.

Aufgabe der vorliegenden Erfindung ist es daher, ein Verfahren zum Montieren von Kraftwagen der eingangs genannten Art zu schaffen, mittels welchem sich eine vereinfachte Montage insbesondere innerhalb der Hauptmontagelinie realisieren lässt.

Diese Aufgabe wird erfindungsgemäß durch ein Verfahren mit den Merkmalen des Patentanspruchs 1 gelöst. Vorteilhafte Ausgestaltungen mit zweckmäßigen und nichttrivialen Weiterbildungen der Erfindung sind in den abhängigen Patentansprüchen angegeben.

Um ein Verfahren der eingangs genannten Art zu schaffen, mittels welchem sich die Montage der Kraftwagen insbesondere innerhalb der Hauptmontagelinie deutlich vereinfachen lässt, ist es erfindungsgemäß vorgesehen, dass das Bodenmodul in einem ersten Vormontageprozess entlang einer separaten Vormontagelinie und der Antriebsstrang sowie das Fahrwerk in einem zweiten Vormontageprozess entlang einer weiteren separaten Vormontagelinie vormontiert werden, wonach das Bodenmodul, der Antriebsstrang und das Fahrwerk in einem Montagebereich zusammengesetzt und anschließend in der Hauptmontagelinie mit dem Rohbau des Kraftwagens verbunden werden, wobei Baueinheiten des Bodenmoduls, des Antriebsstrangs und des Fahrwerks nach dem Zusammensetzen nach dem Zusammensetzen vor dem Einsetzen in den Rohbau miteinander verbunden werden. Mit anderen Worten ist es erfindungsgemäß vorgesehen, das Bodenmodul einerseits und den Antriebsstrang sowie das Fahrwerk andererseits vorzumontieren, diese zu vereinen und schließlich am Rohbau des Kraftwagens anzuordnen. Weiterhin werden Baueinheiten des Bodenmoduls, des Antriebsstrangs und des Fahrwerks nach dem Zusammensetzen innerhalb der so genannten Verlobung miteinander verbunden. Mit anderen Worten ist es bevorzugt vorgesehen, dass nach der Verlobung das Bodenmodul einerseits und das Fahrwerk und der Antriebsstrang andererseits so untereinander verbunden werden, dass diese zumindest weitestgehend vor der Verbindung mit dem Rohbau des Kraftwagens, der so genannten Hochzeit, bereits untereinander in Wirkverbindung sind.

Gerade das Bodenmodul, der Antriebsstrang und das Fahrwerk unterliegen infolge der unterschiedlichen Antriebsvarianten des Kraftwagens einer erheblichen Varianz, welcher besonders günstig dadurch begegnet werden kann, dass entsprechende Vormontageprozesse durchgeführt werden. So kann beispielsweise das Bodenmodul mit einer entsprechenden Ausstattung mit einer Mehrzahl von variantenspezifischen Baueinheiten, welche beispielsweise sequenziert angeliefert werden, ausgestattet werden, um somit in optimaler Weise in der Vormontage an das Antriebskonzept angepasst zu werden. Dasselbe gilt für die vormontierbare Einheit von Antriebsstrang und Fahrwerk, welche ebenfalls eine Mehrzahl von sequenzierten Baueinheiten aufweisen können, welche in Abhängigkeit des Antriebskonzepts des entsprechenden Kraftwagens bereitgestellt und vormontiert werden.

Im Rahmen der Verlobung können dann das Bodenmodul einerseits und der Antriebsstrang und das Fahrwerk andererseits außerhalb der Hauptmontagelinie miteinander vereinigt werden, so dass die Hauptmontagelinie diesbezüglich von Varianten zumindest weitestgehend befreit und somit verschlankt werden kann. Demzufolge ergibt sich ein antriebsneutraler Rohbau, was sich besonders günstig auf die Montagezeiten und -kosten auswirkt.

Weiterhin kann durch dieses Verfahren der Aufwand zur Erzielung einer für die jeweilige Montagelinie geforderte Perlenkettengüte erheblich reduziert werden.

In weiterer Ausgestaltung der Erfindung werden das Fahrwerk und der Antriebsstrang dabei innerhalb des entsprechenden zweiten Vormontageprozesses vorzugsweise auf einem Hilfsträger vormontiert, welcher beispielsweise als so genannter Montageskid ausgebildet sein kann. Auf diesem Hilfsträger können das Fahrwerk und der Antriebsstrang besonders günstig zur Verlobung mit dem Bodenmodul vorbereitet werden.

Eine weitere vorteilhafte Ausführungsform sieht dabei vor, dass das Bodenmodul auf den Hilfsträger aufgesetzt wird. Somit ergibt sich eine besonders einfache und leicht montierbare Verbindung des Bodenmoduls mit dem Antriebsstrang und dem Fahrwerk.

Dabei hat es sich in weiterer Ausgestaltung der Erfindung als vorteilhaft gezeigt, wenn im Anschluss an das Zusammensetzen des Bodenmoduls, des Antriebsstrangs und des Fahrwerks im Rahmen der Verlobung eine Funktionsprüfung von jeweiligen Baueinheiten durchgeführt wird. Somit kann eine Komplettierung und Prüfung der beteiligten Komponenten bereits vor der Hochzeit mit dem Rohbau des Kraftwagens stattfinden, was wiederum die Hauptmontagelinie weiter verschlankt. Nach der Verlobung können dabei auch schon entsprechende Betriebsstoffe eingefüllt oder Energiespeicher entsprechend versorgt werden, so dass insbesondere der Antriebsstrang sowie die Lenkung und die Bremsen bereits betriebsbereit sind. Dies hat den Vorteil, dass der Rohbau nach dem Zusammensetzen im Rahmen der Hochzeit gegebenenfalls auf einfache Weise fahrbereit gemacht werden kann, um zumindest teilweise auf externe Förder- und Transporttechnik zu verzichten.

Auf diese Weise kann schon sehr frühzeitig, bevor die Fahrzeuge in die Hauptmontagelinie gelangen, eine umfangreiche Funktionsprüfung an den Fahrzeugen und den verwendeten Komponenten durchgeführt werden. Fehler und Funktionsstörungen können erkannt und früh beseitigt werden. Weiterhin können dadurch später auftretende Folgefehler vermieden werden. Dies trägt zu einer hohen Fertigungsqualität bei.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische Perspektivansicht auf eine Montagelinie zur Vormontage eines jeweiligen Fahrwerks und eines jeweiligen Antriebsstrangs des entsprechenden Kraftwagens sowie eines Bodenmoduls des jeweiligen Kraftwagens, welche miteinander im Rahmen einer so genannten Verlobung verbunden und vormontiert werden, bevor diese mit einem jeweilig zugehörigen Rohbau des entsprechenden Kraftwagens im Rahmen einer so genannten Hochzeit verbunden werden, wobei im Anschluss an die Hochzeit der Kraftwagen mit Rädern bestückt wird;
- Fig. 2: eine schematische Perspektivansicht auf die Vormontage des Antriebsstrangs und des Fahrwerks innerhalb der in Fig. 1 gezeigten Montagelinie;
- Fig. 3: eine schematische Perspektivansicht auf eine Vormontage des Bodenmoduls innerhalb der Montagelinie gemäß Fig. 1;
- Fig. 4: eine schematische Perspektivansicht auf die Verlobung des Fahrwerks und des Antriebsstrangs mit dem jeweils zugehörigen Bodenmodul innerhalb der Montagelinie gemäß Fig. 1;
- Fig. 5: eine schematische Perspektivansicht auf die Hochzeit des jeweiligen Rohbaus des Kraftwagens mit dem zugehörigen Fahrwerk und Antriebsstrang beziehungsweise dem zugehörigen Bodenmodul innerhalb der Montagelinie gemäß Fig. 1;
- Fig. 6: eine schematische Perspektivansicht auf eine Montagestation der Montagelinie gemäß Fig. 1 nach der Hochzeit, innerhalb welcher die Bestückung des Kraftwagens mit den Fahrzeugrädern erfolgt;
- Fig. 7: eine schematische Perspektivansicht auf Montagestationen einer der Montagelinie gemäß Fig. 1 nachgeschalteten Hauptmontagelinie, in welcher der jeweilige Rohbau des Kraftwagens mit dem Inneneinbau ausgestattet wird;
- Fig. 8: eine weitere ausschnittsweise Perspektivansicht auf jeweilige Montagestationen der Hauptmontagelinie, innerhalb welchen jeweilige Baueinheiten und Komponenten des Inneneinbaus zur Montage bereitgestellt sind; und in
- Fig. 9: eine Perspektivansicht auf den mit dem Fahrwerk, dem Antriebsstrang und dem Inneneinbau versehenen jeweiligen Rohbau des Kraftwagens, welcher im Anschluss an den Inneneinbau mit die Außenhaut bildenden Elementen versehen wird.

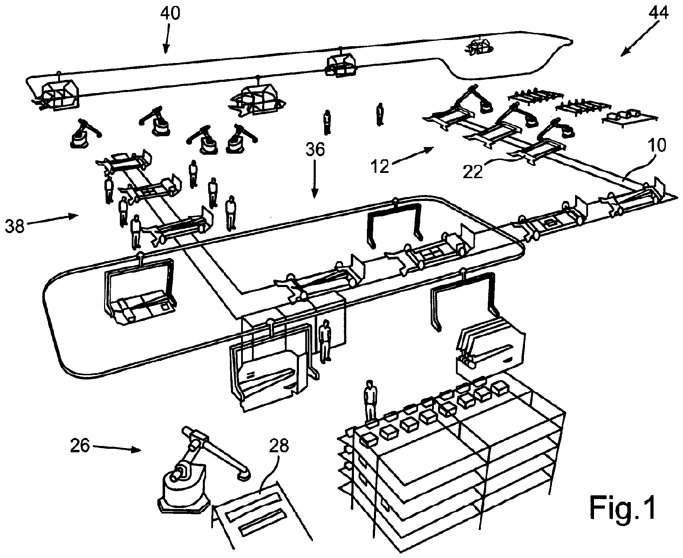

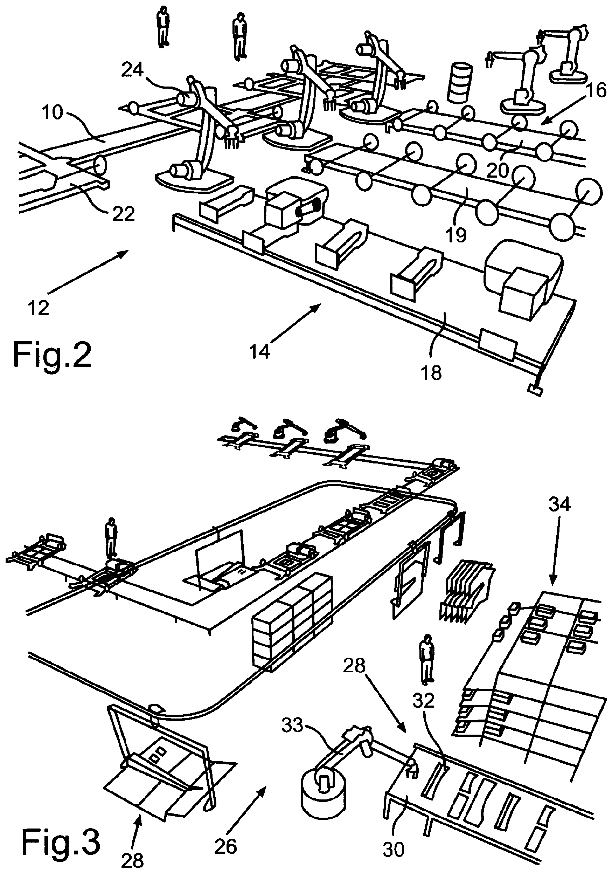

In Fig. 1 ist in einer schematischen Perspektivansicht eine einer im Weiteren noch näher erläuterten Hauptmontagelinie vorgelagerte Montagelinie zum Montieren von Kraftwagen dargestellt. Diese Montagelinie 10 soll im Weiteren in Zusammenschau mit den Fig. 2 bis 6 detailliert erläutert werden.

In Zusammenschau mit Fig. 2 ist zunächst ein erster Bereich 12 der Montagelinie 10 erkennbar, welcher die Vormontage eines jeweiligen Antriebsstrangs 14 und eines jeweiligen Fahrwerks 16 in einem Vormontageprozess des entsprechenden Kraftwagens zeigt. Dabei zeigt Fig. 2 den Bereich 12 in einer schematischen und ausschnittsweisen Perspektivansicht.

Wie aus Fig. 2 erkennbar ist, umfasst der Bereich 12 der Montagelinie 10 eine Bereitstellungseinrichtung 18 für einen jeweils unterschiedlichen Antrieb beziehungsweise Antriebsstrang 14, welcher in Abhängigkeit des jeweiligen Antriebskonzeptes des Kraftwagens bereitgestellt wird. Hinter der Bereitstellungseinrichtung 18 für den jeweiligen Antrieb beziehungsweise Antriebsstrang 14 sind jeweilige Bereitstellungseinrichtungen 19, 20 für eine Vorderachse beziehungsweise Hinterachse des jeweiligen Fahrwerks 16 erkennbar. Neben der Vorder- und Hinterachse können darüber hinaus weitere Fahrwerksglieder oder Komponenten bereitgestellt werden.

Wie nun aus Fig. 2 erkennbar ist, werden die einzelnen Komponenten des Antriebsstrangs 14 und des Fahrwerks 16 auf einem jeweiligen Hilfsträger 22, der auf der Montagelinie 10 befördert wird, angeordnet. Dies erfolgt mittels entsprechender Roboter 24.

Die jeweiligen Komponenten des Antriebsstrangs 14 und des Fahrwerks 16 werden auf den Bereitstellungseinrichtungen 18 bis 20 sequenziert bereitgestellt und auf dem jeweiligen Hilfsträger 22, welcher einem entsprechend zu fertigenden Kraftwagens zugeordnet ist, positioniert. Die sequenzierte Anordnung und Auswahl der einzelnen Komponenten des Antriebsstrangs 14 und des Fahrwerks 16 in dem Vormontageprozess erfolgen dabei in Abhängigkeit eines jeweiligen Antriebskonzeptes des Kraftwagens.

In Zusammenschau mit Fig. 3, die in einer weiteren ausschnittsweisen und schematischen Perspektivansicht insbesondere einen zweiten Bereich 26 der Montagelinie 10 erkennen lässt, wird die Vormontage eines Bodenmoduls 28 in einem weiteren Vormontageprozess deutlich. Dieses Bodenmodul 28 umfasst einen Bodenrohbau 30, an welchem als Ausstattung eine Mehrzahl von Baueinheiten 32 anordnenbar sind. Diese Baueinheiten 32 sind variantenspezifisch beziehungsweise variantenabhängig von dem jeweiligen Antriebskonzept des entsprechenden Kraftwagens. Als Baueinheiten 32 können dabei sowohl einzelne Bauteile beziehungsweise Bauelemente verstanden werden wie auch Zusammenbauten oder Baugruppen. Beispielsweise ist es denkbar, den Bodenrohbau 30 mit Hitzeschildern, hydraulischen Leitungen oder Kraftstoffleitungen ebenso zu versehen wie mit Luftleitungen oder dergleichen. Ebenfalls ist es denkbar, den Bodenrohbau 30 mit entsprechenden antriebskonzeptbedingten Energiespeichern, beispielsweise einem Tank, einer Batterie oder dergleichen, zu versehen. Auch entsprechende Steuergeräte, welche in Abhängigkeit des entsprechenden Antriebskonzeptes des Kraftwagens gebraucht werden, können an dem Bodenrohbau 30 angebracht sein. Elektrische Baueinheiten 32 wie beispielsweise Kabelbäume, insbesondere der Hauptkabelbaum können ebenfalls an dem Bodenrohbau 30 befestigt sein, um hierdurch das Bodenmodul 28 zu komplettieren.

Die einzelnen Baueinheiten 32 werden dabei beispielsweise mittels eines Roboters 33 an dem Bodenrohbau 30 angebracht. Vorliegend ist es symbolhaft ein Regal 34 dargestellt, an welchem die Baueinheiten 32 beispielsweise sequenziert bereitgestellt sind.

Insgesamt ist somit erkennbar, dass zwei separate Vormontageprozesse erfolgen; nämlich ein erster Vormontageprozess zum Erzeugen des Bodenmoduls 28 und ein zweiter Vormontageprozess zum Vormontieren des Antriebsstrangs 14 und des Fahrwerks 18. Dieser zweite Vormontageprozess erfolgt auf dem Hilfsträger 22 in Form des Montageskids. Dabei durchläuft dieser Montageskid die Vormontage, wobei der Roboter 24 sich je nach Variante die benötigte jeweilige Achse oder andere Komponenten sucht.

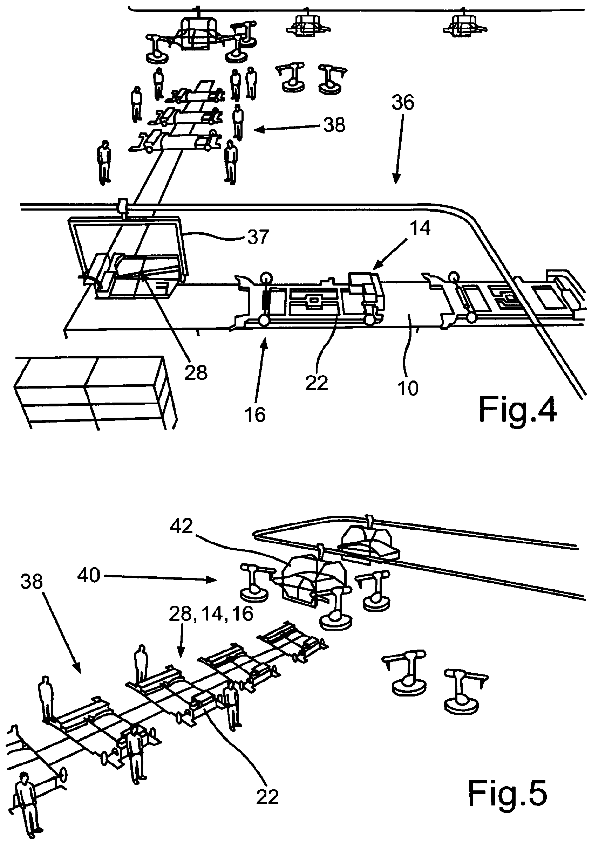

In Zusammenschau mit Fig. 4 ist in einer ausschnittsweisen und schematischen Perspektivansicht ein dritter Bereich 36 der Montagelinie 10 dargestellt. In diesem dritten Bereich erfolgt eine so genannte Verlobung des im ersten Bereich 12 vormontierten Antriebsstrangs 14 mit Fahrwerk 16 und des im zweiten Bereich 26 vormontierten Bodenmoduls 28. Dabei ist erkennbar, dass der den Antriebsstrang 14 und das Fahrwerk 16 tragende Hilfsträger 22 von unten herangeführt und oberseitig über eine entsprechende Transporteinrichtung 37 das Bodenmodul 28 von oben her aufgesetzt wird. Durch die Verlobung entsteht somit eine vormontierte Anordnung von Antriebsstrang 14, Fahrwerk 16 und Bodenmodul 28, welche auf die jeweilige Variante des Kraftwagens beziehungsweise auf das jeweilige Antriebskonzept des Kraftwagens abgestimmt ist.

In Fig. 4 sind außerdem weitere Montagestationen 38 erkennbar, innerhalb welchen beispielsweise eine Verbindung der entsprechenden Komponenten und Baueinheiten 32 des Antriebsstrangs 14, des Fahrwerks 16 und des Bodenmoduls 28 untereinander erfolgt. Neben dem Verbinden der einzelnen Komponenten und Baueinheiten 32 können beispielsweise Leitungen oder Energiespeicher wie Tanks befüllt werden. Außerdem können beispielsweise elektrische Steuergeräte aktiviert werden. Nach der Verlobung sind die einzelnen Komponenten beziehungsweise Baueinheiten 32 somit vorzugsweise betriebsbereit.

Neben der Komplettierung kann im Bereich der Montagestation 38 auch bereits eine Funktionsprüfung von Baueinheiten 32 des Bodenmoduls 28, des Antriebsstrangs 14 und/oder des Fahrwerks 16 erfolgen. Dies hat nicht nur den Vorteil, dass sich der Kraftwagen bereits vor Erreichen der Hauptmontagelinie 46 entsprechend mehr oder minder eigenständig bewegen lässt, sondern darüber hinaus können somit weitere Verfahrensschritte außerhalb der Hauptmontagelinie 46 durchgeführt werden, so dass diese trotz der Vielzahl unterschiedlicher Antriebe äußerst kurz gehalten werden kann.

In Fig. 5 ist ein vierter Bereich 40 der Montagelinie 10 erkennbar, in welchem ein jeweiliger Rohbau 42 im Rahmen einer so genannten Hochzeit mit seinem jeweils zugehörigen Antriebsstrang 14, Fahrwerk 16 und Bodenmodul 28, die zuvor im dritten Bereich 36 im Rahmen der Verlobung miteinander vereinigt worden sind, verbunden wird. Der Rohbau 42 weist hierzu eine entsprechende Ausnehmung für das Bodenmodul 28 auf, welches entsprechend angesetzt wird. Der Antriebsstrang 14 und das Fahrwerk 16 sowie das Bodenmodul 28 werden ebenfalls mit dem Rohbau 42 des Kraftwagens verbunden. Nach der Verbindung mit dem Rohbau 42 kann der Hilfsträger 22, welcher zum Tragen des Antriebsstrangs 14, des Fahrwerks 16 und des Bodenmoduls 28 gedient hat, wieder in den ersten Bereich 12 zurückgeführt werden. An dieser Stelle sei angemerkt, dass es sich beim vorliegenden Rohbau 42 um eine selbst tragende Karosserie eines Personenkraftwagens bzw. um einen selbst tragenden Aufbau eines Kraftwagens allgemein handelt.

Da - wie bereits erläutert - die jeweilige Variante des Antriebskonzepts durch entsprechende Ausbildung des Antriebsstrangs 14, des Fahrwerks 16 und des Bodenmoduls 28 erfolgt, ist der Rohbau 42 im Wesentlichen variantenfrei gestaltet. Dies bedeutet, dass die infolge des Antriebskonzeptes erforderliche Variation zumindest im Wesentlichen in die Vormontage des Antriebsstrangs 14, des Fahrwerks 16 und des Bodenmoduls 28 vorverlagert wird.

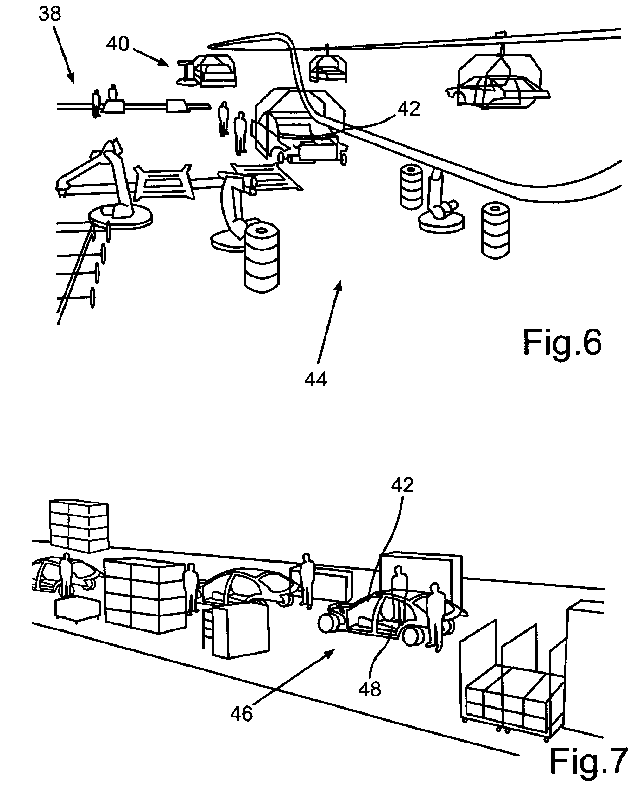

Fig. 6 zeigt schließlich eine weitere Montagestation 44 der Montagelinie 10, bei welcher der Kraftwagen mit Fahrzeugrädern versehen wird. Dies hat insbesondere den Vorteil, dass somit auf Förder- und Transporteinrichtungen, welche das Gewicht des Fahrzeugs aufnehmen bzw. tragen müssen, verzichtet werden kann. Vielmehr kann ab dieser Montagestation 44 der Wagen durch die weitere Montage, insbesondere die im Weiteren noch erläuterte Hauptmontagelinie, gerollt werden. Dies kann entweder fremdkraftbetrieben oder aber durch den eigenen Antrieb des Kraftwagens erfolgen.

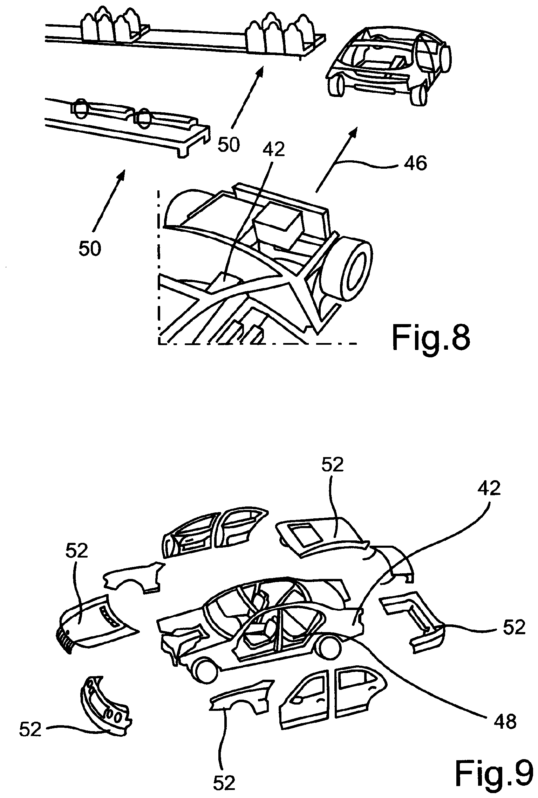

Die Fig. 7 und 8 zeigen jeweilige Perspektivansichten einer Hauptmontagelinie 46, welche sich an die Montagelinie 10 anschließt. Im Unterschied zum bisherigen Montageverfahren findet dabei erst im Anschluss an die Hochzeit die Ausstattung des Rohbaus 42 mit einem Inneneinbau 48 statt. Dieser Inneneinbau 48 umfasst insbesondere den Einbau der Instrumententafel, der Sitzanlagen, der Innenraumverkleidungen, der Mittelkonsole sowie einer Mehrzahl von weiteren Einrichtungen wie beispielsweise der Pedalerie, der Lenksäule oder anderer weiterer Ausstattungen. Hierzu zeigt Fig. 8 jeweilige Montagestationen 50, bei welchen beispielsweise entsprechend zugehörige Sitzanlagen oder Instrumententafeln montiert werden. Fig. 7 zeigt darüber hinaus, dass beispielsweise die Verscheibung des Rohbaus 42 in der Hauptmontagelinie 46 erfolgen kann.

Schließlich zeigt Fig. 9 den Rohbau 42 des Kraftwagens in einer schematischen Perspektivansicht, bei welchem der Inneneinbau 48 bereits vorgenommen worden ist. Es ist erkennbar, dass neben dem Inneneinbau 48 auch die Frontscheibe und die Heckscheibe eingepasst worden sind.

In einem weiteren Verfahrensprozess innerhalb der Hauptmontagelinie wird der Rohbau 42 des Kraftwagens nach der Ausstattung mit dem Inneneinbau 48 mit einer Mehrzahl von Elementen 52 versehen, welche die Außenhaut des Kraftwagens bilden. Diese Elemente können nicht nur bewegliche Türen oder Hauben beziehungsweise Klappen, sondern auch andere Außenbeplankungsteile wie Kotflügel, Dachmodule, Frontend- und Heckmodule oder andere Außenanbauteile sein. Dabei ist der Kraftwagen vorzugsweise so ausgebildet, dass der gesamte Rohbau 42 mit entsprechenden außenbeplankenden Elementen 52 kaschiert wird. Dies hat nämlich den Vorteil, dass somit der Rohbau 42, bevor dieser zur Hochzeit angeliefert wird, lediglich mit einem Korrosionsschutz versehen werden muss, nicht jedoch mit einer Lackierung. Diese kann nämlich eingespart werden, da sämtliche Bereiche keine Sichtteile sind, sondern durch die außenbeplankenden Elemente 52 überdeckt werden.

Die Einstellung von Funktionselementen des Kraftwagens kann bevorzugter Weise bereits innerhalb der Hauptmontagelinie 46 vorgenommen werden, und zwar insbesondere deshalb, um die Umfänge im Bereich des Endes der Hauptmontagelinie 46 zu verringern. So kann beispielsweise eine Fahrwerkseinstellung, eine Scheinwerfereinstellung oder eine Kalibrierung und Inbetriebnahme von Fahrerassistenzsystemen, insbesondere auch Fahrwerksassistenzsystemen, von der Montagehauptlinie 44 bereits in die Vormontage verlagert werden. Beispielsweise können somit entsprechende Einstellungen von Funktionselementen im Anschluss an die Verlobung beziehungsweise vor oder nach der Hochzeit im Bereich der Vormontage und vor der Hauptmontagelinie 46 geprüft werden. Ebenso ist es durch die Möglichkeit zum autonomen Bewegen des Kraftwagens möglich, dass dieser auf entsprechende Rollenprüfstände oder in Bereiche zur Regenprobe bewegt wird.

## Patentansprüche

1. Verfahren zum Montieren von Kraftwagen, bei welchem ein Antriebsstrang (14), ein Fahrwerk (16) sowie ein Bodenmodul (28) vormontiert und anschließend mit einem selbsttragenden Rohbau (42) des Kraftwagens verbunden werden,
**dadurch gekennzeichnet, dass**
das Bodenmodul (28) in einem ersten Vormontageprozess entlang einer separaten Vormontagelinie (26) und der Antriebsstrang (14) sowie das Fahrwerk (16) in einem zweiten Vormontageprozess entlang einer weiteren separaten Vormontagelinie (12) auf einem Hilfsträger (22) vormontiert werden, wonach das Bodenmodul (28), der Antriebsstrang (14) und das Fahrwerk (16) in einem Montagebereich (36) zusammengesetzt und anschließend in der Hauptmontagelinie (46) mit dem Rohbau (42) des Kraftwagens verbunden werden, wobei Baueinheiten (32) des Bodenmoduls (28), des Antriebsstrangs (14) und des Fahrwerks (16) nach dem Zusammensetzen vor dem Einsetzen in den Rohbau (42) miteinander verbunden werden.

2. Verfahren nach Anspruch 1,
**dadurch gekennzeichnet, dass**
an dem Bodenmodul (28) eine Ausstattung (31) mit einer Mehrzahl von variantenspezifischen Baueinheiten (32) vorgesehen wird.

3. Verfahren nach Anspruch 1 oder 2,
**dadurch gekennzeichnet, dass**
an dem Bodenmodul (28) eine Mehrzahl von Baueinheiten (32) in Abhängigkeit eines Antriebskonzepts des entsprechenden Kraftwagens vorgesehen werden.

4. Verfahren nach Anspruch 3,
**dadurch gekennzeichnet, dass**
das Bodenmodul (28) auf den Hilfsträger (22) aufgesetzt wird.

5. Verfahren nach einem der vorhergehenden Ansprüche,
**dadurch gekennzeichnet, dass**
nach dem Zusammensetzen des Bodenmoduls (28), des Antriebsstrangs (14) und des Fahrwerks (16) vor einen Ende einer Hauptmontagelinie (46), und insbesondere vor einer Verbindung mit dem Rohbau (42) des Kraftwagens, Funktionsprüfungen der Baueinheiten (32) des Bodenmoduls (28), des Antriebsstrangs (14) und/oder des Fahrwerks (16) durchgeführt werden.

## Claims

1. Method for assembling motor vehicles, wherein a drive train (14), a chassis (16) and a floor module (28) are pre-assembled and then joined to a unitised body frame (42) of the motor vehicle,
**characterised in that**
the floor module (28) is pre-mounted on an auxiliary support (22) in a first pre-assembly process along a separate pre-assembly line (26) and the drive train (14) and the chassis (16) are pre-mounted on an auxiliary support (22) in a second pre-assembly process along a further separate pre-assembly line (12), whereupon the floor module (28), the drive train (14) and the chassis (16) are assembled in an assembly area (36) and then joined to the body frame (42) of the motor vehicle in the main assembly line (46), wherein modular units (32) of the floor module (28), the drive train (14) and the chassis (16) are joined to one another after assembly before the installation into the body frame (42).

2. Method according to claim 1,
**characterised in that**
an equipment (31) with a plurality of variant-specific modular units (32) is provided on the floor module (28).

3. Method according to claim 1 or 2,
**characterised in that**
a plurality of modular units (32) is provided on the floor module (28) depending on a drive concept of the respective motor vehicle.

4. Method according to claim 3,
**characterised in that**
the floor module (28) is placed on the auxiliary support (22).

5. Method according to any of the preceding claims,
**characterised in that**
following the assembly of the floor module (28), the drive train (14) and the chassis (16), before an end of the main assembly line (46) and in particular before joining to the body frame (42) of the motor vehicle, function tests of the modular units (32) of the floor module (28), the drive train (14) and/or the chassis (16) are carried out.

## Revendications

1. Procédé de montage d'un véhicule automobile, selon lequel une chaîne cinématique (14), un châssis (16) ainsi qu'un module de plancher (28) étant pré-montés et ensuite étant reliés à une caisse nue (42) autoportante du véhicule automobile, **caractérisé en ce que** le module de plancher (28) dans un premier processus de pré-montage le long d'une ligne de pré-montage séparée (26) et la chaîne cinématique (14) ainsi que le châssis (16) dans un second processus de pré-montage le long d'une autre ligne de pré-montage séparée (12) sont prémontés sur un support auxiliaire (22), à la suite de quoi le module de plancher (28), la chaîne cinématique (14) et le châssis (16) sont assemblés dans une zone de montage (36) et ensuite dans la ligne de montage principale (46) sont reliés à la caisse nue (42) du véhicule automobile, les unités de construction (32) du module de plancher (28), de la chaîne cinématique (14) et du châssis (16) étant reliés ensemble après l'assemblage avant l'insertion dans la caisse nue (42).

2. Procédé selon la revendication 1, **caractérisé en ce que** sur le module de plancher (28) est disposé un équipement (31) ayant une pluralité d'unités de construction spécifiques à des variantes.

3. Procédé selon la revendication 1 ou la revendication 2, **caractérisé en ce que** sur le module de plancher (28) est disposée une pluralité d'unités de construction (32) en fonction d'un concept d'entraînement du véhicule automobile correspondant.

4. Procédé selon la revendication 3, **caractérisé en ce que** le module de plancher (28) est placé sur le support auxiliaire (22).

5. Procédé selon l'une quelconque des revendications précédentes, **caractérisé en ce que**, après l'assemblage du module de plancher (28), de la chaîne cinématique (14) et du châssis (16) avant une extrémité d'une ligne de montage principale (46), et en particulier avant une liaison à la caisse nue (42) du véhicule automobile, des contrôles de fonctionnement des unités de construction (32) du module de plancher (28), de la chaîne cinématique (14) et/ou du châssis (16) sont réalisés.
